# EUROPEAN PATENT SPECIFICATION

(11) **EP 2 543 219 B1**
(45) Date of publication and mention of the grant of the patent: **03.12.2014**
(21) Application number: 10710818.5
(22) Date of filing: 05.03.2010
(51) Int. Cl.: H04W 72/04

(54) **METHOD, APPARATUS AND USER EQUIPMENT FOR USE IN A MOBILE COMMUNICATIONS SYSTEM COMPRISING A RELAY NODE**
VERFAHREN, VORRICHTUNG UND BENUTZERGERÄT ZUR VERWENDUNG IN EINEM MOBILEN KOMMUNIKATIONSSYSTEM MIT EINEM RELAISKNOTEN
PROCÉDÉ, APPAREIL ET ÉQUIPEMENT D'UTILISATEUR DESTINÉS À ÊTRE UTILISÉS DANS UN SYSTÈME DE COMMUNICATION MOBILE COMPRENANT UN NOEUD DE RELAIS

(43) Date of publication of application: 09.01.2013
(73) Proprietor: Nokia Solutions and Networks Oy, 02610 Espoo (FI)
(72) Inventor: TEYEB, Oumer, DK-9000 Aalborg (DK); WIGARD, Jeroen, DK-9270 Klarup (DK); FREDERIKSEN, Frank, DK-9270 Klarup (DK); REDANA, Simone, 81541 München (DE); RAAF, Bernhard, 82061 Neuried (DE); VAN PHAN, Vinh, FI-90100 Oulu (FI)
(74) Representative: Borgström, Markus
(86) International application number: PCT/EP2010/052803
(87) International publication number: WO 2011/107154

(56) References cited:
- US-A1- 2009 046 641
- "3rd Generation Partnership Project; Technical Specification Group Radio Access Network; Further Advancements for E-UTRA Physical Layer Aspects (Release 9)", 3GPP STANDARD; 3GPP TR 36.814, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.5.0, 18 December 2009 (2009-12-18), pages 1-51, XP050401368, [retrieved on 2009-12-18]

## Description

### FIELD OF THE INVENTION

The present invention relates to a method, an apparatus and a user equipment and in particular but not exclusively to a method and apparatus usable for example in a wireless or mobile communications system comprising relay nodes.

### BACKGROUND

A communication system can be seen as a facility that enables communication sessions between two or more entities such as mobile communication devices and/or other stations associated with the communication system. A communication system and a compatible communication device typically operate in accordance with a given standard or specification which sets out what the various entities associated with the system are permitted to do and how that should be achieved. For example, the standard or specification may define if a communication device is provided with a circuit switched carrier service or a packet switched carrier service or both. Communication protocols and/or parameters which shall be used for the connection are also typically defined. For example, the manner how the communication device can access the communication system and how communication shall be implemented between communicating devices, the elements of the communication network and/or other communication devices is typically based on pre-defined communication protocols.

In a wireless communication system at least a part of the communication between at least two stations occurs over a wireless link. Examples of wireless systems include public land mobile networks (PLMN), satellite based communication systems and different wireless local networks, for example wireless local area networks (WLAN). The wireless systems can be divided into cells, and are therefore often referred to as cellular systems.

A user can access the communication system by means of an appropriate communication device. A communication device of a user is often referred to as user equipment (UE). A communication device is provided with an appropriate signal receiving and transmitting arrangement for enabling communications with other parties. Typically a communication device is used for enabling the users thereof to receive and transmit communications such as speech and data. In wireless systems a communication device provides a transceiver station that can communicate with e.g. a base station of an access network servicing at least one cell and/or another communications device. Depending on the context, a communication device or user equipment may also be considered as being a part of a communication system. In certain applications, for example in ad-hoc networks, the communication system can be based on use of a plurality of user equipment capable of communicating with each other.

The communication may comprise, for example, communication of data for carrying communications such as voice, electronic mail (email), text messaging, multimedia and so on. Users may thus be offered and provided numerous services via their communication devices. Non-limiting examples of these services include two-way or multi-way calls, data communication or multimedia services or simply an access to a data communications network system, such as the Internet. The user may also be provided with broadcast or multicast content. Non-limiting examples of the content include downloads, television and radio programs, videos, advertisements, various alerts and other information.

3^{rd} Generation Partnership Project (3GPP) is standardizing an architecture that is known as the long-term evolution (LTE) of the Universal Mobile Telecommunications System (UMTS) radio-access technology. The aim is to achieve, inter alia, reduced latency, higher user data rates, improved system capacity and coverage, and reduced cost for the operator. A further development of the LTE is referred to herein as LTE-Advanced (LTE-A). The LTE-Advanced aims to provide further enhanced services by means of even higher data rates and lower latency with reduced cost. The various development stages of the 3GPP LTE specifications are referred to as releases.

Since the new spectrum bands for international mobile telecommunications (IMT) contain higher frequency bands and LTE-Advanced is aiming at a higher data rate, coverage of one Node B (base station) can be limited due to the high propagation loss and limited energy per bit. Relaying has been proposed as a possibility to enlarge the coverage. Apart from this goal of coverage extension, introducing relay concepts may also help in the provision of high-bit-rate coverage in a high shadowing environment, reducing average radio-transmission power at the User Equipment (UE). This may lead to longer battery life, enhanced cell capacity and effective throughput, e.g., increasing cell-edge capacity, balancing cell load, enhancing overall performance, and reducing deployment costs of radio access networks (RAN). The relaying would be provided by entities referred to as Relay stations (RSs) or Relay Nodes (RNs).

The 3GPP technical report TR 36.814 V1.5.0, 18 December 2009, XP050401368, discloses resource partitioning for relay-eNodeB link.

### SUMMARY

According to an aspect, there is provided a method comprising selecting one of a plurality of communication options, each communication option providing a different division of resources between a first link between at least one relay node and a base station and a second link between said at least one relay node and a plurality of user equipment configured to communicate with said at least one relay node; and using said selected communication option to control the division of resources between said first and second links, wherein said using comprises sending information to a user equipment to control an activity of that user equipment in dependence on said selected communication option.

According to another aspect, there is provided an apparatus comprising means for selecting one of a plurality of communication options, each communication option providing a different division of resources between a first link between at least one relay node and a base station and a second link between said at least one relay node and a plurality of user equipment configured to communicate with said at least one relay node; and means for causing said selected communication option to be used to control the division of resources between said first and second link, wherein said causing means is configured to cause information to be provided to a user equipment to control an activity of that user equipment.

According to a further aspect, there is provided a user equipment comprising receiving means for receiving medium access control information comprising a sleep mode duration from an access node and a processor for processing said received information, wherein said processor is configured to cause said user equipment to be put into a sleep mode for the duration specified in said medium access control information.

### BRIEF DESCRIPTION OF DRAWINGS

Some embodiments of the invention will now be described in further detail, by way of example only, with reference to the following examples and accompanying drawings, in which:
Figure 1 shows a cell with three relay nodes:
Figure 2 shows the interfaces between a relay node, a base station and a UE (user equipment);
Figure 3 shows a first quadruplex operation of a relay node;
Figure 4 shows a second quadruplex operation of a relay node;
Figure 5 shows a set of patterns available for relay to UE and relay to base station operation;
Figure 6 shows an arrangement which uses two of the set of patterns of Figure 5;
Figure 7 shows a block diagram of an apparatus for an access node usable with some embodiments of the invention;
Figure 8 shows a method embodying the invention; Figure 9 shows a block diagram of an apparatus for a UE usable with some embodiments of the invention; and
Figure 10 shows a primary pattern and corresponding DRX patterns in another embodiment of the invention.

### DETAILED DESCRIPTION OF SOME EMBODIMENTS

As specified in 3GPP TR 36.814 (Third Generation Partnership Project) relaying is considered as one of the potential techniques for LTE-A where a relay node is wirelessly connected to the radio access network via a donor cell. Some embodiments of the invention are described in the context of the LTE-A proposals. However, other embodiments of the invention can be used in any other scenario which for example requires or uses one or more relays.

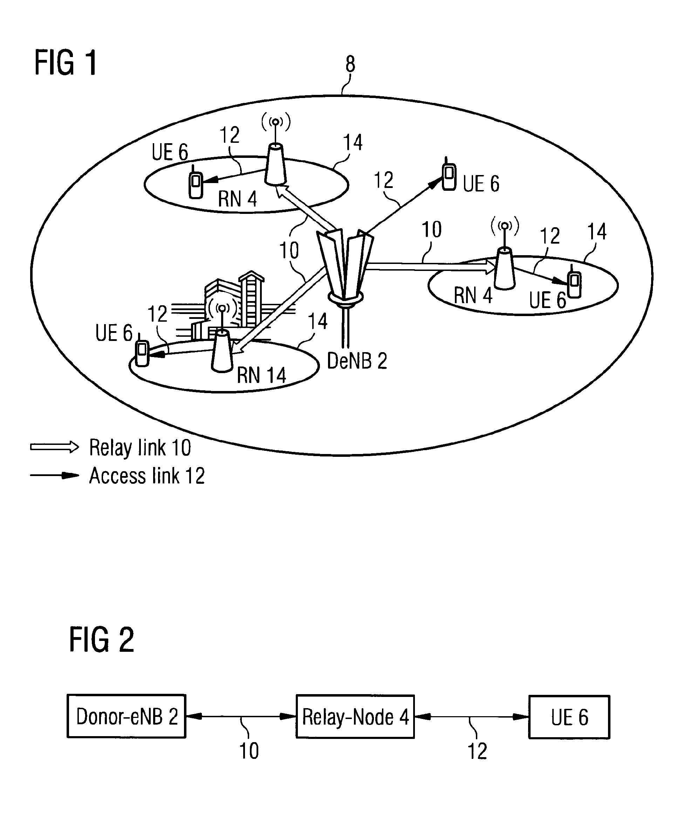

Reference is made to Figure 1 which shows part of a LTE radio access network (RAN). An access node 2 is provided. The access node can be a base station of a cellular system, a base station of a wireless local area network (WLAN) and/or WiMax (Worldwide Interoperability for Microwave Access). In certain systems the base station is referred to as Node B, or enhanced Node B (e-NB). For example in LTE-A, the base station is referred to as e-NB. The term base station is intended to include the use of any of these access nodes or any other suitable access node. The eNB, which supports one or more relay nodes, is sometimes referred to as a DeNB (Donor eNB). The base station 2 has a cell 8 associated therewith. In the cell, there are provided three relay nodes 4 (in some embodiments a relay node may be considered to be an access node). This is by way of example only. In practice there may be more or less than three relay nodes. One of the relay nodes 4 is provided close to the edge of the cell to extend coverage. One of the relay nodes 4 is provided in a traffic hotspot and one of the relay nodes is provided at a location where there is an issue of shadowing from for example buildings. Each of the relay nodes has a coverage area 14 associated therewith. The coverage area may be smaller than the cell 8, of a similar size to the cell or larger than the cell. A relay link 10 (represented by the thicker arrow) is provided between each relay node 4 and the base station 2. The cell has user equipment 6. The user equipment is able to communicate directly with the base station 2 or with the base station 2 via a respective relay node 4 depending on the location of the user equipment 6. In particular, if the user equipment 6 is in the coverage area associated with a relay node, the user equipment may communicate with the relay node. The connections between the user equipment and the relay node and the direct connections between the user equipment and the base station are referenced 12 and represented by the thinner arrows.

The UE or any other suitable communication device can be used for accessing various services and/or applications provided via a communication system. In wireless or mobile communication systems the access is provided via an access interface between mobile communication devices (UE) 6 and an appropriate wireless access system. The UE 6 can typically access wirelessly a communication system via at least one base station either directly or via a relay node. The communication devices can access the communication system based on various access techniques, such as code division multiple access (CDMA), or wideband CDMA (WCDMA), the latter technique being used by communication systems based on the third Generation Partnership Project (3GPP) specifications. Other examples include time division multiple access (TDMA), frequency division multiple access (FDMA), space division multiple access (SDMA) and so on. In a wireless system a network entity such as a base station or relay node provides an access node for communication devices. Each UE may have one or more radio channels open at the same time and may receive signals from more than one base station and/or other communication device. A "type 1" RN has been proposed, which is an inband relaying node having a separate physical cell ID (identity), support of HARQ (Hybrid automatic repeat request) feedback and backward compatibility to Release 8 (Rel 8) UEs. Release 8 is one of the versions of LTE.

In the RAN2 #65bis meeting (this is part of 3GPP), RAN 2 agreed with the definition for the nodes and the interfaces as shown in figure 2. The wireless interface 12 between UE 6 and RN is named the Uu interface. For those embodiments where at least partial backward compatibility is desirable for example where compliance with a particular version of 3GPP standards TR 36.913 and TR36.321 is provided, the Uu interface would be at least partially consistent with the Release 8 interface as defined in LTE. The wireless interface 10 between the relay node 4 and the donor e-NB 2 is the Un interface. The link is considered as backhaul link. It should be appreciated that some embodiments of the invention may be at least partially backwardly compatible with Rel 8 whilst other embodiments may not be compatible with Rel 8.

Relaying can be realised at the different layers of the protocol stacks. Embodiments of the present invention may be used with L3 or higher relay nodes which higher layer relay nodes may be considered almost as wireless base stations and support all the protocol layers of a normal base station. As mentioned previously, these L3 or higher layer relays are referred to as type 1 relays. It should be appreciated that alternative embodiments of the invention may be used with for example L2 relay nodes. L2 relay nodes may be such that HARQ and DRX (discontinuous reception) cycles may be controlled on Layer 2. In other embodiments of the invention, a L3 relay node may be used. Alternatively or additionally at least some of the required functionality may be implemented in the eNB. Relays are required to operate four different links. This compares to the usual two links of user equipment and base station. This is because the relays of course have to have an uplink connection and a downlink connection to the eNB and separate uplink and downlink connections for the user equipment. These four links can be called "quadruplex" in an analogous manner to the referral of the two usual links as "duplex".

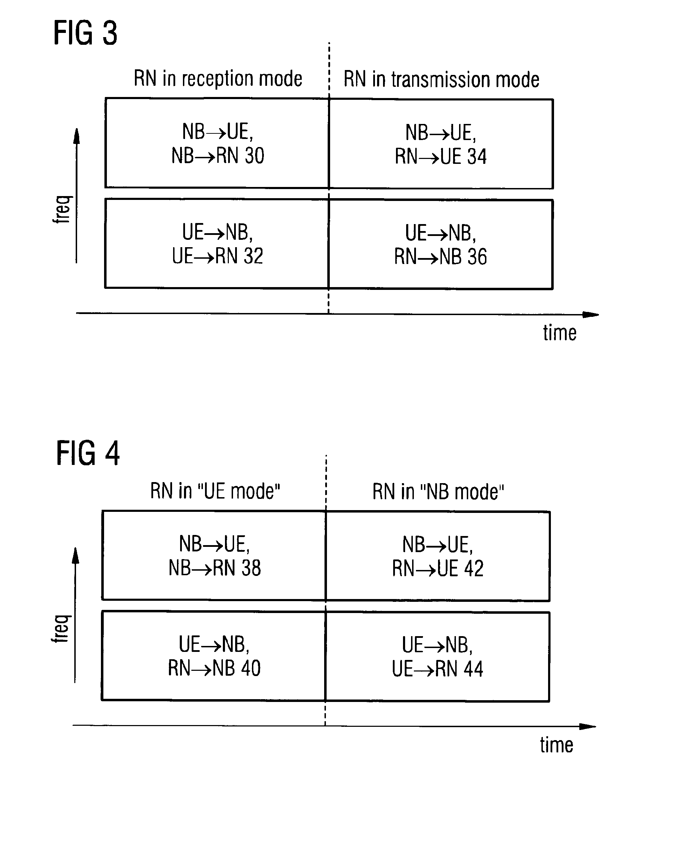

In one embodiment of the present invention, for frequency division duplex (FDD) systems, an additional time division multiplexing (TDM) structure based on for example on a subframe basis may be used. This combination of FDD with the additional TDM structure may allow for orthogonal transmissions on the base station to relay links and the relay to user equipment links. In this regard, reference is made to Figures 3 and 4. Figure 3 shows a first quadruplex operation of relays where the relay node switches over the course of time between reception and transmission modes.

In the arrangement shown in Figure 3, a first frequency band is allocated for a first time (represented by block 30) for transmissions from the base station to the user equipment (directly and not via a relay) and for transmissions from the base station to the relay node 30.

A second frequency band is allocated for that same time period, as referenced by block 32, for transmissions from the user equipment to either the base station (directly and not via a relay node) or for a user equipment to transmit to the relay node. Thus, for this first time period, the relay node is in a reception mode and is able to receive signals from the user equipment and the base station, but on different frequency bands.

In a subsequent time period, the first frequency band (as represented by block 34) is allocated for the base station and the relay node to transmit to the user equipment.

Finally, for that second time period, the second frequency band (as represented by block 36) is allocated for the user equipment and the relay node to transmit respectively to the base station. Thus, for this second time period, the relay node is in a transmission mode and transmits to the user equipment and to the base station.

An alternative quadruplex operation is illustrated in Figure 4. For a first frequency band in the first time period, referenced 38, the relay node is configured to receive signals from the base station. In a second frequency band, in that same time period and referenced 40, the relay node is arranged to transmit to the node B. It should be appreciated that in the first frequency band in the first time period, the base station is arranged to transmit to the user equipment. In the second frequency band in the first time period, the user equipment is arranged to transmit to the base station. Thus, the relay node is in a so-called user equipment mode. Thus, the relay node provides user equipment functionality to the base station.

In the first frequency band in the second time period, referenced 42, the base station is arranged to transmit to some of the user equipment whilst the relay node is arranged to transmit to other of the user equipment.

In the second frequency band, in the second time period, referenced 44, some user equipment is arranged to transmit directly to the base station whilst other user equipment is arranged to transmit to the relay node.

It should be appreciated that the first and second time periods may span pre-defined numbers of subframes. For example, each time period could be a subframe.

It should furthermore be appreciated that in some embodiments of the invention the first and second periods may be arranged in any appropriate order and the thus obtained sequence defines a communications option which specifies the subframes designated for DL and/or UL communication between base station and relay node and between a relay node and user equipment attached to it.

It should be appreciated that in some embodiments of the present invention, the so-called "first frequency band" may be different in the first and second time periods. Similarly, the "second frequency band" may be different in the first and second time periods.

In some embodiments of the invention, a maximum of two hops is allowed in the system. In other words, a user equipment is permitted to connect directly to a base station or to a base station via no more than two hops. In practice, this means that the user equipment will connect to a single relay node which connects to the base station. However, in some embodiments of the present invention, more than two hops may be provided.

In some embodiments of the present invention, a tree topology may be used between the base station and its relay node. In a tree topology, there are no connections between the relay nodes. However, in alternative embodiments of the present invention, there may be some connections between the relay nodes.

In some embodiments of the present invention, there may be two types of subframes. One type of subframes is a unicast subframe and the other type is the multicast subframe. The multicast subframe is referred to in some standards as the multicast broadcast single frequency network (MBSFN) sub-frame. The downlink subframes (subframes 0, 4, 5 and 9 in a FDD (frequency division duplex) system, or subframes 0, 1, 5, 6 in a TDD (time division duplex) system) are unicast subframes containing reference signals. These reference signals may be for example release 8 reference signals or any other suitable reference signals. The remaining six subframes can be configured for either unicasting or MBSFN. In a MBSFN sub-frame, the reference signals are transmitted in the first couple of OFDM (orthogonal frequency division multiplexing) symbols and may be used to assist the user equipment in channel estimation and other measurements. A third type of subframes, known as a blank subframe, has also been proposed. Blank subframes may be part of later releases of LTE, for example release 10 or beyond. A blank subframe does not have reference signals. During a blank subframe, nothing is sent to the UEs, not even reference signals, in some embodiments of the invention.

A direct application of the quadruplexing option, in for example relation to the release 8 system may require alteration of the channel estimation mechanisms using the reference signals. This is because when the relay node is in reception mode as shown for example in Figure 3 or in the user equipment mode in the case of Figure 4, the relay node will not be able to send the reference signals to the user equipment. In the release 8 version of the standard, the user equipment are expected to monitor the PDCCH (physical downlink control channel) for the reference signals at all times unless they are in a discontinuous reception (DRX) sleep mode.

In one arrangement, to switch the relay node into reception mode, the base station is configured to send control information to the relay node. The control information may be provided by OFDM symbols. The user equipment will assume that this is some MBSFN transmission with low power and will not make use of the signals transmitted. Since the first one or two symbols are still used for reference signals and during this time the base station relay link is not used, this leads to the base station relay node link operating for about 67 to 79 percent of the subframe duration. The exact value depends on factors such as length of the cyclic prefix and the propagation time. Decoding of the reference signals all the time may be avoided but measures need to be taken in order to ensure that the uplink ACKs (acknowledgments) to the DL downlink transmission and uplink retransmissions will not be sent when the relay mode is in a UE mode (i.e. receiving from the base station) as this would result in their loss.

A DRX cycle comprises an "On Duration" when a UE checks for scheduling messages destined to that user equipment. When such a message is received, the UE starts the "Inactivity Timer" and checks for new scheduling messages on the PDCCH destined to the UE while the "Inactivity Timer" is running and each new scheduling message restarts the "Inactivity Timer". If the UE does not receive a scheduling message during the "On Duration" the UE enters a sleep mode and will not check for scheduling messages until the DRX cycle has expired. The "DRX Command MAC Control Element" stops the onduration and the inactivity timer and thus makes the UE enter the sleep mode. Release 8 defines the DRX Command MAC Control Element such that the UE is forced to sleep until the start of the next DRX cycle. Thus, this allows the user equipment to monitor the PDCCH discontinuously.

Embodiments of the invention may provide a method for aligning DRX cycles and blank subframes in order to avoid the loss of uplink ACKs and retransmissions, whilst at the same being able to keep the benefit of DRX for user equipment battery power saving and scheduling flexibility.

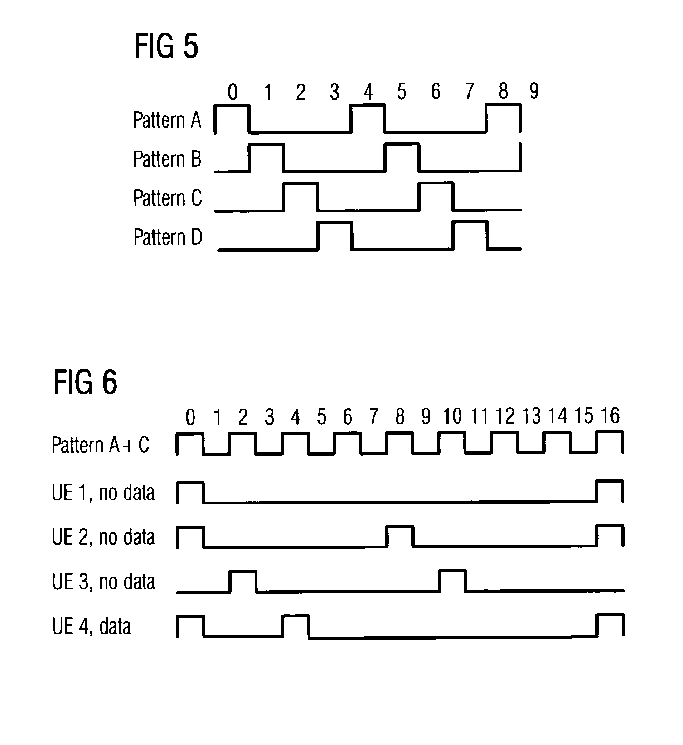

Reference is now made to Figure 5 which shows four primary patterns, primary patterns A, B, C and D. The numbers in Figure 5 each represent a period comprising a predetermined number of subframes. In this embodiment, the predetermined number of subframes is 1. These primary patterns may be used in the context of the arrangement of Figure 3 or 4. In the context of the arrangement of Figure 3, the UEs may need to operate in a half duplex mode of operation.

The length of the primary patterns in Figure 5 was set to 4 by way of example only. The appropriate length in a communication standard may depend on the feedback delay in a HARQ process from data transmission to ACK/NACK signalling.

Each subframe is typically of the order of 1ms in duration, in one embodiment of the present invention. However this is by way of example only and of course the subframes may be of any suitable duration. When the pattern has a relatively high level, this means that there is communication between the relay node and the user equipment. When the pattern has the lower level, this means that the relay node and the base station are in communication. Blank subframes occur in the downlink communication from the RN to an attached UE when the pattern has the low level. For the Un interface between eNB and RN there are no blank subframes required (but blank subframes may be present in some embodiments of the invention) as the eNB is not operating in a quadruplex mode and can continuously transmit reference symbols. Non blank subframes are used in the communication from the user equipment to the relay node. In some embodiments of the invention, non blank frames may be used for some of the communications from the relay node to the user equipment.

Consider for example primary pattern A for a downlink communication between a relay node and a user equipment attached to this relay node when HARQ is employed. Downlink data is received via the user equipment from the relay node in sub-frame 0. In subframe 4, there is an uplink transmission from the user equipment to the relay node, using the grant received in subframe 0 as well as ACK/NACK for the downlink data received in subframe 0. In subframe 8, there is the ACK/NACK for the uplink transmission received at the relay node from the user equipment in sub-frame 4 as well as downlink transmission or retransmission.

In one embodiment of the present invention, the cycle length of 4 subframes is used since in for example LTE release 8, the uplink resources are defined as being used by the user equipment four subframes after uplink grant. However, it should be appreciated that in alternative embodiments, a different cycle length may be used. Additionally any suitable number of patterns may be used in alternative embodiments of the invention. In one alternative, the number of patterns may be equal to the cycle length. The number of pattern combinations may be 2ⁿ where n is the number of patterns. The appropriate length in a communication standard may depend on the feedback delay in a HARQ process from data transmission to ACK/NACK signalling.

In Figure 5, primary pattern B has downlink data received in subframe 1 with the uplink transmission as well as ACK/NACK for the downlink data received in subframe 1, in subframe 5.

In primary pattern C, the downlink data is received in sub-frame 2 whilst in primary pattern D, the downlink data is received in subframe 3.

The uplink transmission as well as the ACK/NACK downlink data is sent in subframe 6 for primary pattern C and subframe 7 for primary pattern D.

The different primary patterns can be used by different relay nodes. Further, the primary patterns can be combined to have an overall or composite pattern as seen between the relay node and the base station, without disturbing the ACK reporting as well as the uplink transmission. For example, it is possible to have 0, 25, 50, 75 and 100 percent split between the relay node to user equipment and relay node to base station allocations. For example, using primary pattern A, there will be 25% usage for relay node/user equipment connection whilst the relay node/base station connection will have 75% of the available time. If primary patterns A and C, for example are combined in a pattern, there will be 50% for the relay node/user equipment connection and 50% for relay node/base station connection, and so on. Note that the 0% and 100% settings are extreme cases in which one link may be deactivated completely while the other is taking all the resources. These settings may be relevant for relaying. In some embodiments, these settings are only used for very short durations when one of the links may be experiencing very bad radio conditions or alternatively these settings may not be relevant for relaying but may support cases where only one link is to be configured.

In one embodiment of the present invention, between 0 and 4 of the primary patterns are combined in a pattern and the primary patterns may be combined in any suitable combination. The different combinations may provide different communication options.

In one embodiment of the present invention, this use of different patterns is easily combined with DRX operations. For example, consider a combination of primary pattern A and primary pattern C. Some user equipment will be using primary pattern A and other user equipment will be using primary pattern C. It is also possible that one or more user equipment may use both primary pattern A and primary pattern C. The overall impact will be that 50% of the subframes will be used for communication between the relay node and user equipment whilst the rest of the subframes will be used for the communication between the relay node and the base station.

Of course a similar 50% split can be achieved by a pattern using primary pattern A with primary pattern B or primary pattern D or any combination of two of the four primary patterns.

Returning to the embodiment where primary pattern A and primary pattern C are used, the onDuration timer is set to 1. The onDuration timer specifies the number of consecutive PDCCH subframes at the beginning of a DRX cycle when the user equipment checks for scheduling messages on PDCCH destined to it.

The DRX inactivity timer is disabled. This DRX inactivity timer specifies the number of consecutives subframes a user equipment stays awake and monitors the PDCCH after successfully decoding an uplink grant or a downlink message destined to the user equipment. By setting the onDuration equal to 1 and disabling the inactivity timer the user equipment can be set to be active only in the first subframe and in the sleep mode for the rest of the DRX cycle. The DRX parameters (onDuration, inactivity timer, etc) are set by the DeNB (if the UE is directly connected to the DeNB) or by the RN (if the UE is connected via the RN). In some embodiments the DeNB may control the DRX parameters even for those UE which are connected to the RN. If the user equipment has to wake up for retransmission or to send ACKs, the relay node will be active at that time.

It should be appreciated that another user equipment can be set up to have a longer DRX cycle or a different inactivity timer depending on the quality of service of its active bearers. The inactivity timer is thus a parameter that can be set by the access node (DeNB or RN, depending to which the UE is connected). If the inactivity timer is disabled, this means that it has its value set to zero. Even where the UE is connected to the RN, the eNB may be controlling the DRX cycle parameters, in alternative embodiments of the invention.

Reference is made to Figure 6 which shows an arrangement which uses a combination of primary patterns A and C. The combination of the primary patterns A and C is shown in Figure 6 in the first line. In the second line of Figure 6, the DRX operation of a first user equipment is shown with the DRX cycle of 16. Since the first user equipment did not receive a scheduling message in the first subframe, that user equipment will go to sleep until the next DRX cycle.

The third line of Figure 6 shows a second user equipment which has the beginning of its DRX cycle in subframe 0. In this example, the user equipment has a DRX cycle period of 8 subframes. Again, since the second user equipment received no data in the 0 subframe, the user equipment goes back to sleep for the remainder of the DRX cycle.

The third user equipment, shown in the fourth line, is similar to the second user equipment in that no data is received in the active part of the cycle. However, the active part of the cycle for the third user equipment is the second sub-frame. The third user equipment again has a DRX cycle of 8 subframes.

The fourth user equipment has the same DRX cycles as the first user equipment and the active part of the DRX cycle is in subframe 0. This is shown in the fifth line of Figure 6. In this case, the fourth user equipment receives data in the first subframe and then sends the uplink acknowledgment and/or uplink data four subframes later, that is subframe 4.

The user equipment which has a high flow of data can be assigned a shorter DRX period that has the same cycle as the combination of primary pattern A with primary pattern C to make sure that user equipment can use all of the available relay node user equipment links.

It should be appreciated that the combination of patterns shown in Figure 6 is by way of example only. Any single primary pattern or combination of any two or more primary patterns may be used.

Reference is made to Table 1 below.

**Table 1: IDs for all possible patterns**

| **Pattern ID** | **Bitmap** | **Primary Pattern(s) used** | **% subframes for eNB-RN communication** |
|---|---|---|---|
| 0 | 0000 | RN-UE disabled | 100% |
| 1 | 0001 | A | 75% |
| 2 | 0010 | B | 75% |
| 3 | 0011 | A + B | 50% |
| 4 | 0100 | C | 75% |
| 5 | 0101 | A + C | 50% |
| 6 | 0110 | B + C | 50% |
| 7 | 0111 | A + B + C | 25% |
| 8 | 1000 | D | 75% |
| 9 | 1001 | A + D | 50% |
| 10 | 1010 | B + D | 50% |
| 11 | 1011 | A + B + D | 25% |
| 12 | 1100 | C + D | 50% |
| 13 | 1101 | A + C + D | 25% |
| 14 | 1110 | B + C + D | 25% |
| 15 | 1111 | RN-eNB disabled | 0% |

In this table, the pattern to be used can be specified using a four-bit long ID. As can be seen, there are 16 different combinations of primary patterns A to D ranging from none of the primary patterns being used (pattern ID 0) and effectively all of the primary patterns being used (pattern ID 15). When all of the primary patterns are used, the relay node to base station connection is effectively disabled. When the particular pattern is identified, the primary patterns may be combined to provide a resulting pattern, such as shown for example in Figure 6 to control the usage of the respective connections.

For each of the patterns, the percentage of the subframes for the base station/relay node connections are shown. The remaining percentages represent the percentage of subframes for the relay node user/equipment connections.

The relay node and base station can collaborate to decide on the best pattern to be used and the pattern identity can be communicated between the base station and the relay node. The RN and/or the DeNB will make this decision.

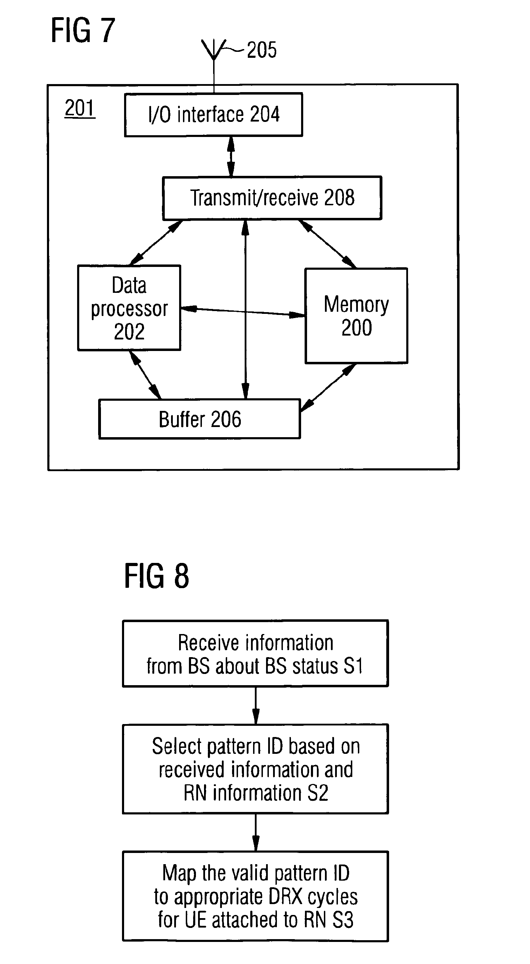

Reference is made to Figure 8 which shows a flow diagram of a method performed by the RN. The decision may be considered to be a radio resource management (RRM) operation. For example, in LTE, the access nodes (eNB and the RN) are in control of the RRM operation. The decision may take into account the quality of the radio links between eNB/RN and RN/UE as well as the total data flow and/or data quality requirements to/from the RN in order to avoid congestion problems in the RN. Information regarding the bearers may be accessible at the access node. This can be the RN, or both the DeNB and RN, depending on the relay architecture. In some L3 architectures that are being considered in the 3GPP, the RN is aware of the UE bearers.

In step S1, the RN is arranged to receive from the eNB appropriate information when negotiating the appropriate pattern with the eNB. Such information may be, for example, status information on internal buffers for avoiding buffer overflow or underflow in the base station, quantity of data, data quality requirements and/or link quality.

In step S2, the relay node selects the pattern ID based on received information from the base station and information which the relay node has itself. This information may comprise status information on internal buffers for avoiding buffer overflow or underflow in the relay node, quantity of data, data quality requirements and/or link quality.

In step S3, the relay node is able to translate the valid pattern ID into appropriate DRX cycles for the UE attached to the RN.

Alternatively or additionally, the eNB may know the definition of the proposed patterns and may consider the selected pattern in the eNB scheduling decisions, for example for connections to relay nodes. Communication between the eNB and a relay node may only take place when the valid pattern allows such a communication. Alternatively or additionally, the eNB may control the valid pattern ID for the connections to the attached RNs. In that case, the relay node may provide the information of step S2 to the base station.

In one embodiment, the main factor which is considered in deciding the pattern ID to be used is the link quality of the access and the relay links. Priority may be given to the link with the best or worse quality, depending on the selection criteria, to optimise resource utilisation. It should be appreciated that other criteria may be applied to determine which one or more links are to be given priority.

A pattern with a high percentage of relay link usage may be desirable in the case where the access link quality is poor and vice versa, is used in one embodiment. For example, if the access link of many of the relayed user equipment have been experiencing unfavourable conditions for some time and the quality improves again, the data in the buffer that has been built up in the relay node can be emptied faster by switching to a lower relay/base station link percentage pattern, for example patterns 7, 11, 13, 14 and even 15. In some embodiments, care has to be taken with pattern 0 to make sure that it will not be used while there are any pending uplink acknowledgements or uplink transmissions. Accordingly, in some embodiments of the present invention, pattern 0 is used sparingly and only for short durations, particularly where all the access links are experiencing very bad quality simultaneously. Priority may be given to the link with the worst quality if the specific service has low delay and minimum throughput requirements. For example, if the access link of many of the relayed user equipment has been experiencing unfavourable conditions for some time the minimum throughput can be guaranteed by switching to a lower relay/base station link percentage pattern, for example patterns 7, 11, 13, 14 and even 15.

Alternatively, a pattern with a high percentage of relay link usage may be desirable in the case where the access link quality is high and vice versa, is used in other embodiments. Of course other criteria may be used when selecting a particular pattern for a particular link.

The relay node will convert the pattern into compatible DRX settings for transmission to the user equipment. The choice of the DRX settings should consider the required quality of service of the active bearers of the individual user equipment. For example, user equipment that has active bearers with strict delay requirements would benefit from a shorter DRX cycle than a user equipment that only has best effort bearers.

Instead of storing pattern combinations, it is of course possible in alternative embodiments of the invention to store information defining a plurality of different individual usage patterns themselves. The information may be the patterns themselves or may be an algorithm to generate the patterns. Alternatively the information may simply be a percentage usage for a particular link and the node in question is configured to cause the link usage to match the selected percentage usage.

In one embodiment of the invention, as an alternative to controlling the DRX cycle, the MAC command or the like is modified to provide information defining the length of the sleep phase for the respective UE. By defining the length of the sleep timer the RN can time the UEs attached to it to wake up for receiving DL data from the RN to the time when the RN is not in reception mode from the eNB.

In embodiments of the present invention, the use of the four different primary patterns and their combination to align the DRX cycles and blank subframes in the relay enhanced LTE makes it possible to avoid the loss of uplink ACKs and retransmissions without affecting the DRX operation of the user equipment.

In an alternative embodiment of the present invention, it is possible to use the concept of measurement/idle periods instead of or additionally to the patterns shown above to ensure that the uplink retransmissions will not be lost. If the base station/ relay node communication duration is set as a measurement period for relayed user equipment, the user equipment will not even do retransmissions but when the next uplink grant comes during the relay node/user equipment connection period, and if there is no new data indicator, the user equipment will know that the transmission has not been successful and will transmit it. This may not be suitable for all types of service however. Such measurement/idle periods may be used by the user equipment, for example, to prepare for inter-frequency handover or for handover to another radio access technology. These measurement gaps are such that the data flow on active connections is not compromised, for example no data packet is lost. Alternatively such measurement gaps may be triggered by the RN in the attached UE when the RN is communicating with the eNB.

In the DRX embodiments described previously, during the DRX off period, if there is an UL retransmission or ACK to be sent, the UE wakes up even before reaching the next DRX on duration. In contrast, using measurement gaps, a certain duration is set as a measurement period, and the UE will not wake up for the sake of a UL retransmission or ACK sending during this period.

In the above described embodiments, reference has been made to a sleep mode of the user equipment. It should be appreciated that this is an example of one possible state where at least part of the UE equipment is in an off mode. It should be appreciated that in alternative embodiments of the invention the UE may have additionally or alternatively other off modes where at least part of the UE circuitry is off and/or deactivated and/or in a reduced power mode.

For the sake of simplicity comparatively simple primary patterns have been described above. It will be apparent to those skilled in the art, that more complex primary patterns can be combined likewise to form the composite pattern, and then compatible DRX cycles can be configured for the UEs that are attached to the RN. For example, only a subset of the subframes are eligible to be configured as MBSFN subframes according to the current LTE standard. In one alternative embodiment, the primary patterns are designed in a way that the primary patterns are all themselves a subset of these eligible subframes. The combination of all those primary patterns will provide a full subset of eligible subframes and provide a high percentage (up to for example 60%) for the backhaul link, leaving at least 40% for the access links. This may avoid the case that there are no resources at all left for the access link. If not all primary patterns are combined then a lower percentage of resources is used for the backhaul. In some embodiments, the DRX patterns are defined that have active states only during the subframes which are used for the access link. For example, in one embodiment primary patterns that use odd subframes only are combined for backhaul communication and DRX patterns that have only even subframes are assigned as active subframes. In this embodiment, there may be some odd subframes that are not used for backhaul communication and which may also not be used as active states for the UEs DRX cycles. However, this may not have a significant impact on the efficiency of the system due to one or more of the following reasons: If the relay node has a smaller coverage area than an eNB, (which it typically does because the relay node uses a smaller transmission power and consequently the relay node signal does not reach as far as the eNB's signal), then there will typically be less UEs attached to the RN therefore these UEs only need a correspondingly lower share of the resources.

As was explained above, UEs can be configured by virtue of the inactivity timer not to go into the DRX mode after having received a data-packet. These UEs can then also be served in those subframes that are not assigned as active subframes in any of the used DRX patterns.

In some embodiments, when more and more primary patterns have to be combined to provide sufficient backhaul capacity in certain situations, it may not be possible to maintain sufficient subframes available for access communication that it is possible to find DRX patterns that have their active states exclusively during subframes that are available for the access link. In those embodiments, the patterns as selected such that there is as high a percentage as possible of the active subframes during access subframes.

In one alternative, DRX patterns are assigned to some UEs that always have active states during access subframes, while other UEs are assigned DRX patterns whose active states sometimes coincide with subframes that are not used for access (but instead for backhaul). Effectively such an active state of the DRX pattern that does not coincide with an access subframe but a backhaul subframe may not be useable for communication i.e. this may give a similar performance if that subframe was also inactive i.e. as if a larger number of subframes between active subframes was configured in this particular case. This may not be a disadvantage however, if the effective DRX pattern (i.e. the pattern without these lost active subframes) is suited to the QoS requirements of a particular user's service.

In some embodiments, the DRX pattern in a case of irregular primary or composite patterns may be optimized: One option is to specify specific DRX patterns that are not as regular as the patterns mentioned previously but are instead adapted to the available access subframes and are therefore irregular themselves. Both the RN and UE need to be aware of such a pattern definition i.e. it has to be standardized or information needs to be communicated such that both the UE and the RN are aware of the pattern. One option to achieve such an irregular DRX pattern is to apply the usual DRX patterns, but not count every subframe when counting the time until the next active subframe, but only count eligible subframes. A DRX pattern with 8ms periodicity will then cause a gap of 8+x ms if there are x subframes which are not access subframes within the 8+x ms. A similar approach may be been taken for TDD (Time Division Duplex), where some subframes are not available for downlink communication because they are used for uplink communication instead.

One embodiment may be to only count eligible subframes in the DRX formula, not all subframes, similarly as for TDD where only DL subframes are counted, but not UL subframes. Alternatively more complex formulas that take the irregular access subframe distribution into account can be designed. Another option for a UE implementation is that the UE knows that there is no use in becoming active for certain subframes i.e. the UE stays in a "sleep" mode until the next DRX on duration that coincides with an access subframe. This may n be implemented in a UE in a proprietary way and the RN does not have to be aware whether the UE supports that feature or not, making it easy to implement it at any time in the UEs. There is no need to exchange information whether the UE implements this option or not with the RN, the RN can assume that the UE uses the option. However, the UE needs to know the eligible access subframes which it can deduce e.g. from the allocation of MBSFN subframes. The UE does not wake up every access frame, but only if it is both an eligible access frame and it is active according to the DRX pattern as well.

The currently standardized release 8 DRX cycle periods are typically of the form 2ⁿ or 5*2ⁿ milliseconds for various values of n, while MBSFN patterns can be defined with a periodicity of 40ms (and thus also 20 and 10 ms). Because 2¹=2, 2²=4, 2³=8, 5, 5*2¹=10, 5*2²=20, 5*2³=40 are all dividers of 40, it is possible to design primary patterns that can be easily combined with DRX cycles of length 2, 4, 5, 8, 10, 20, 40ms. In an embodiment, only those subframes that are not assigned as active DRX subframes are allocated for the backhaul. Because all patterns repeat with a periodicity of 40 ms there is no beating of the DRX patterns with the MBSFN pattern. The on duration specifies how many subframes the UE stays awake before going to sleep again. An on duration will typically be of the order of 1ms although in alternative embodiments of the invention, the on duration may be of a different length. In the latter case it may happen that the UE is "awake" for several subframes. In some embodiments of the invention, the first subframe may always be an access subframe, whilst the further subframes may be backhaul subframes as well and thus not be available for communication. The UE can go to sleep during those subframes similarly as was explained above for the case that the initial or single subframe of the on duration coincides with a backhaul subframe. However, at least for short on durations, in some embodiments, it is possible to design primary (or composite) patterns that provide groups of access subframes, not just single access subframes, between backhaul subframes. The DRX patterns can be selected with an on duration >1 subframe where all the active subframes are access subframes, or at least predominantly.

In a modification, DRX cycles longer than 8ms e.g. 16ms or 32ms etc. are possible if there is an 8 ms DRX pattern: The 16ms pattern only uses every other active state of the 8 ms pattern, in other words the 8 ms pattern can be split into two 16ms pattern, even though 16ms and 40ms do not have a common divider. In this way suitable DRX patterns can be assigned to each UE. This may also be the case for DRX cycles with a periodicity which is 5*2ⁿ times larger than the 8ms DRX pattern, then any UE only uses every 5*2ⁿ-th active subframe of the 8ms DRX pattern and there are 5*2ⁿ interleaved such patterns.

There may be a restriction on the MBSFN pattern i.e. the primary patterns as discussed above. In one embodiment of the invention another approach is taken in order to still make an alignment with the DRX patterns possible: in one embodiment the primary patterns are designed in a way that they assign only such subframes within the 40 ms repetition period, that have the same value modulo time period e.g. modulo 8 ms, e.g. only take them from the set 0, 8, 16, 24, 32 or alternatively from the set 4,12,20, 28, 36. Some of the values of such a set are not valid MBSFN subframes, so these are dropped from the pattern giving then the two primary patterns 8, 16, 32 and 12, 28, 36. Further patterns can be generated in a similar way giving the following set of primary patterns as shown in Table 2:

**Table 2: Primary patterns realizable with MBSFN subframes for 8 ms timing**

| **Primary Pattern Number** | | **1^{st} MBSFN SF** | **2^{nd} MBSFN SF** | **3^{rd} MBSFN SF** | | **mod 8** |
|---|---|---|---|---|---|---|
| 0 | | 8 | 16 | 32 | | 0 |
| 1 | | 1 | 17 | 33 | | 1 |
| 2 | | 2 | 18 | 26 | | 2 |
| 3 | | 3 | 11 | 27 | | 3 |
| 4 | | 12 | 28 | 36 | | 4 |
| 5 | | 13 | 21 | 37 | | 5 |
| 6 | | 6 | 22 | 38 | | 6 |
| 7 | | 7 | 23 | 31 | | 7 |

All patterns have the property that all the subframes of one primary pattern give the same remainder modulo 8 as indicated in the last column of Table 2. The primary patterns from one of the previous embodiments are included as primary patterns number 0 and 4. They can be combined advantageously to a composite pattern 8 12 16 28 32 36 which has the property that it contains only values which are divisible by 4. Additionally three further DRX patterns can be configured with a 4ms repetition i.e. the combinations of primary pattern 1+5, 2+6 and 3+7. All these patterns of Table 2 completely avoid the MBSFN subframes. For the primary patterns 1, 3, 5 and 7 a DRX pattern with 2 ms cycle can be configured starting at subframe 0 that never collides with any of these primary patterns and therefore also not with any composite pattern that is derived by combining any of these 4 primary patterns. Examples for such primary pattern combinations are 1+5, 2+6 or 3+7. In another embodiment, these combined patterns can be used as primary patterns as well. Another alternative is to combine any of the four primary patterns 0, 2, 4 and 6, then also one DRX period with a periodicity of 2 ms can be configured, this time however starting at an odd subframe. Note that DRX patterns with higher periodicity being a multiple of 2ms can also be configured as well as was explained already above for the example of the 16ms patterns.

Apart from being suitable for DRX patterns for the UEs, these just mentioned primary patterns are also suitable for the backhaul link because they have a periodicity of 8ms in general. Sometimes, the distance is 16ms, if a subframe is not eligible for MBSFN operation. Because the general HARQ Round Trip Time (RTT) is 8ms in LTE such an arrangement is well suited because it allows the reuse of the same timing also for the backhaul link but sometimes it may be extended to 16ms. This is however also possible in LTE and corresponds to the case that the first retransmission after 8 ms is lost, which can happen at any time.

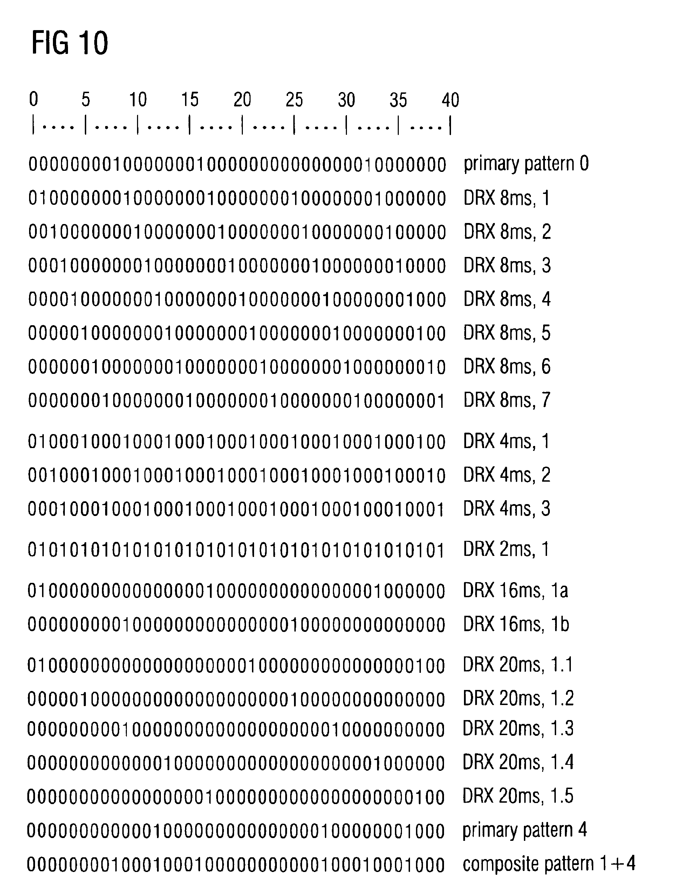

Reference is made to Figure 10, which provides an example of how the aforementioned primary patterns of Table 2 can be combined with DRX patterns.
In the top 2 lines a "ruler" is given showing the numbering of the subframes from 0 to 39.

In the next line, labelled primary pattern 0 the primary pattern 0 from the table 2 is depicted. A "1" indicates a subframe used for backhaul communication, in this case the subframes 8, 16 and 32.

The following 7 lines show the 7 possible DRX patterns with periodicity 8ms that can be combined with primary pattern 0. In these DRX lines a "1" denotes a subframe where the UE is actively receiving, while a 0 denotes a subframe where the UE is sleeping. As can be seen none of the "1"s of any of the DRX patterns collides with a "1" of the primary pattern.

The following 3 lines show three possible DRX patterns with a periodicity of 4ms that can be combined with primary pattern 0. Again there are no collisions.

The following line shows the only possible DRX pattern with periodicity 2ms that can be combined with primary pattern 0. Again there are no collisions.

The following 2 lines show the two possible DRX patterns with periodicity 16ms that can be derived from the first 8m DRX pattern and that can be combined with primary pattern 0. Again there are no collisions.

The two 16ms patterns are a sub sampling of the first 8ms pattern. It is possible to generate two 16ms patterns from each of the other three 8ms DRX patterns. In total there are 2*7=14 patterns.

The next five lines shown five 20ms pattern which can be achieved by sub sampling the first 4 ms pattern five times. Of course the other two 4ms patterns can be similarly sampled. In total there are 5*3=15 patterns.

The line labelled "primary pattern 4" shows the primary pattern 4. As was stated above it is aligned with all the 2ms and 4 ms DRX patterns and also the patterns derived from those with 16ms and 5 ms periodicity. However it collides with the 8ms DRX pattern number 4. This shows that also when combining primary patterns to form composite patterns, the invention can be applied.

The line labelled "composite pattern 1+4" shows the composite pattern that is obtained by combining primary patterns 0 and 4 from table 2. Also this composite pattern can be combined with the DRX patterns that are compatible with both primary patterns 4 and 0.

If a DRX cycle of the form 5*2ⁿ milliseconds is used, then other primary patterns can be used, for example exhibiting a 5 ms or 10 ms structure as shown in Table 3:

**Table 3: Primary patterns realizable with MBSFN subframes for 10 ms timing**

| **Primary Pattern Number** | | **1^{st} MBSFN SF** | **2^{nd} MBSFN SF** | | **mod 5** |
|---|---|---|---|---|---|
| 1 | | 1 | 11 | | 1 |
| 2 | | 2 | 12 | | 2 |
| 3 | | 3 | 13 | | 3 |
| 6 | | 6 | 16 | | 1 |
| 7 | | 7 | 17 | | 2 |
| 8 | | 8 | 18 | | 3 |

These primary patterns only have a single subframe every 10 ms, the 2^{nd} subframe is included in the above table to show the periodicity more clearly. Note that the primary pattern number is identical to the 1^{st} subframe for convenience; therefore there are no primary patterns 4 or 5. Primary patterns with the same value mod 5 can be nicely combined e.g. pattern 1 and 6 or 2 and 7 or 3 and 8. This gives a composite pattern with 5ms periodicity which nicely works with DRX patterns with 5ms periodicity or a multiple thereof. But also other combinations of primary patterns are possible and they all allow DRX patterns with 10ms periodicity or a multiple thereof.

The primary MBSFN patterns discussed above , though not being fully regular, can be suitably combined to form various composite patterns which can then be well aligned with DRX patterns for RN attached UEs.

Aligning DRX patterns and the composite (or primary) patterns may provide one or more of the following advantages in some embodiments of the invention:
- UEs do not awake from a sleep mode during times when there is no possibility to send packets to the UEs. This avoids unnecessary energy consumption.
- UEs, which are not fully aware of the implementation of blank or MBSFN subframes that are used for the backhaul communication, can be configured to be in sleep mode during those subframes. Therefore there is little risk that the UEs are confused by an unknown subframe types. This allows embodiments of the invention to be used in a backwardly compatible way without updating legacy terminals.

Thus in some embodiments it is possible to define DRX patterns that are irregular, similar to the way that MBSFN sub frames are defined. In one embodiment, for example, the MBSFN information can mask out the DRX setting. For example the DRX setting of the UE may be "multiplied" with the advertised MBSFN setting, to come up with a composite DRX that might not be regular. Thus in some embodiments it is possible to avoid completely or almost completely transmission by the UE in MBSFN subframes.

The data part of an MBSFN subframe is ignored by Rel-8 devices, i.e. this part of the MBSFN subframe is always "blank" only for Rel-8 devices. Devices according later releases get additional information which subframes are actually used for broadcast or other new features and which are used for something else where the UE does not have to care about. For the former the UEs may try to evaluate the data part of a MBSFN subframe. In some embodiments of the invention the required channel estimation is different for MBSFN (the UE is aware of this) and failed transmissions in MBSFN subframes do not trigger any retransmissions. A receiver may miss at least a part of a MBSFN subframe without any effect on the data transmission in subsequent subframes.

As mentioned above, some embodiments always allocate an UL x ms (for example x may be 4 or any other suitable value) after the DL. It may be that UL and DL backhaul subframes are allocated on different SFs. For the UL a MBSNF subframe is not allocated, in UL subframes used for backhaul simply no UEs are scheduled in that subframe and thus the subframe is blanked. This does not affect the UE as each UE anyhow is not transmitting on many subframes, typically because other UEs are scheduled there.

Reference is made to Figure 7 which shows an apparatus 201 which may be used in embodiments of the invention. The apparatus 201 comprises at least one memory 200 and at least one buffer 206. The apparatus also comprises at least one data processing unit 202 and transmit/receive circuitry 208. The transmit part of the circuitry will up convert signals from the base band to the transmitting frequency and may provide suitable modulation and/or encoding. The receive part of the circuitry 208 is able to down convert the received signals to the baseband and may provide suitable demodulation and/or decoding. The apparatus has an input/output interface 204 which connects the transmit/receive circuitry to an antenna 205.

The transmit/receive circuitry 208 is connected to the memory 200, the data processing unit 202 and the buffer 206. The data processing unit 202 is also connected to the memory 200 and the buffer 206. The buffer 206 is also connected to the memory. The patterns may be stored in the memory 200. The patterns may be stored in a look up table with the pattern ID controlling which particular pattern is used. The primary patterns may be combined by the data processing unit to give the resulting pattern to be used. The data processing unit may receive information from at least one other access node which is used to control the selection of the pattern. In the case of the apparatus being in a relay node, the additional information may be provided by the base station and in the case of the apparatus being in a base station, the additional information may be provided by the relay node. In the case that the base station makes the decision, the data processor in the apparatus in the relay node is arranged to process information indicating the selected pattern (the information may be the pattern ID). However, the relay node may alternatively make the decision.

This apparatus may be provided in the base station or the relay node.

In the case of the base station an additionally connection, usually wired is provided to a node of the network. Accordingly, a separate input/output interface may be provided.

In the case of the relay node, the input/output interface 204 and the transmit /receive circuitry may be configured to deal with both the links to the UEs and with the base station. In alternative embodiments, separate circuitry may be provided for the different links. The data processing unit may be arranged to translate the selected pattern into the associated DRX cycles for the UE and to cause the apparatus to transmit the associated DRX cycle control information to the UEs.

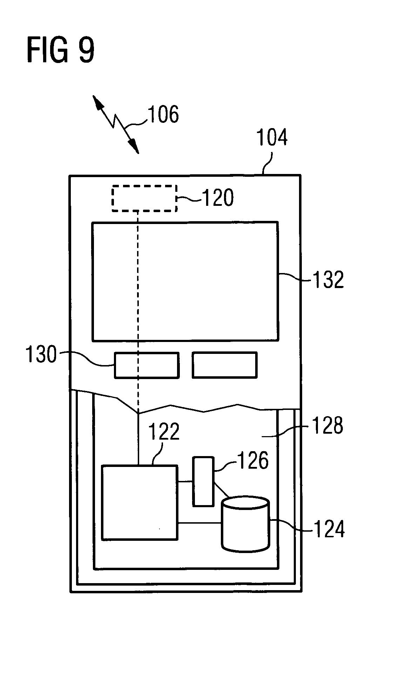

Figure 9 shows a schematic, partially sectioned view of a communication device 104 that can be used for communication with an access node (relay node or base station) within the communication system. An appropriate communication device 104 (user equipment) may be provided by any device capable of sending and receiving radio signals. Non-limiting examples include a mobile station (MS), a portable computer provided with a wireless interface card or other wireless interface facility, personal data assistant (PDA) provided with wireless communication capabilities, or any combinations of these or the like. A mobile communication device may be used for voice and video calls, for accessing service applications and so on. The communications device 104 may transmit and receive signals over an air interface 106 via a transceiver, designated schematically by block 120. The transceiver may be provided for example by means of one or more radio parts and one or more associated antenna arrangements. The antenna arrangements may be arranged internally or externally to the communications device 104.

The communications device 104 may also be provided with at least one data processing entity 122, at least one memory 124 and other possible components 126 for use in software aided execution of tasks it is designed to perform, including control of access to and communications with access systems. The data processing, storage and other relevant control apparatus can be provided on an appropriate circuit board and/or in chipsets. This feature is denoted by reference 128.

The user may control the operation of the mobile device by means of a suitable user interface such as key pad 130, voice commands, touch sensitive screen or pad, combinations thereof or the like. A display 132, a speaker and a microphone are also typically provided. Furthermore, a mobile communication device may comprise appropriate connectors (either wired or wireless) to other devices and/or for connecting external accessories, for example hands-free equipment, thereto.

The activity of the communications device will be controlled by the data processing entity in response to the information received from the relay node/base station. This information may control the DRX cycle as previously described. Alternatively the information may be the MAC control element which controls the length of time for which the communication device is in the sleep mode.

The required data processing unit and functions of a relay node and a base station apparatus as well as the UEs may be provided by means of one or more data processors. The above described functions may be provided by separate processors or by an integrated processor. The data processing may be distributed across several data processing modules. A data processor may be provided by means of, for example, at least one chip or a chip set. Appropriate memory capacity can also be provided in the relevant nodes. An appropriately adapted computer program code product or products may be used for implementing the embodiments, when loaded on an appropriate data processing apparatus, for example in a processor apparatus associated with the base station, processing apparatus associated with relay node and/or a data processing apparatus associated with the UE. The program code product for providing the operation may be stored on, provided and embodied by means of an appropriate carrier medium. An appropriate computer program can be embodied on a computer readable record medium. A possibility is to download the program code product via a data network.

It is noted that whilst embodiments have been described in relation to LTE, similar principles can be applied to any other communication system where relaying is employed. Therefore, although certain embodiments were described above by way of example with reference to certain exemplifying architectures for wireless networks, technologies and standards, embodiments may be applied to any other suitable forms of communication systems than those illustrated and described herein.

It is also noted herein that while the above described exemplifying embodiments of the invention, there are several variations and modifications which may be made to the disclosed solution without departing from the scope of the present invention.

## Claims

1. A method comprising:
selecting one of a plurality of communication options, each communication option providing a different division of resources between a first link (10) between a relay node (4) and a base station (2) and a second link (12) between the relay node (4) and a plurality of user equipment (6) configured to communicate with the relay node (4); and
using said selected communication option to control the division of resources between said first and second links (10, 12), wherein said using comprises sending information to a user equipment (6) configured to communicate with the relay node (4) to control an activity of that user equipment (6) in dependence on said selected communication option.

2. A method as claimed in claim 1, comprising selecting a communication option such that said relay node is configured to be capable of transmitting on the first and second links at the same time for some of a period of time and said relay node is configured to be capable of receiving on the first and second links for other of the period of time.

3. A method as claimed in claim 1, comprising selecting a communication option such that said relay node is configured to be capable of transmitting to said base station and receiving from said base station on said first link for some of a period of time and said relay node is configured to be capable of receiving from a user equipment and transmitting to the user equipment on said second link for other of the period of time.

4. A method as claimed in any of claims 1 to 3, wherein each communication option comprises information identifying if a period of time is configured for data transmission on the first link or for data transmission on the second link.

5. A method as claimed in any of claims 1 to 4, wherein controlling an activity of that user equipment in dependence on said selected communication option comprises overriding a temporal activity pattern configured for that user equipment when an active phase of the preconfigured temporal activity pattern does not comply with the selected communication option.

6. A method as claimed in any of claims 1 to 4, wherein controlling an activity of that user equipment in dependence on said selected communication option comprises disregarding periods of time that do not comply with the selected communication option when evaluating a temporal activity pattern configured for that user equipment.

7. A method as claimed in any of claims 1 to 4, wherein controlling an activity of that user equipment in dependence on said selected communication option comprises configuring a temporal activity pattern of that user equipment such that active phases of that user equipment comply with the selected communication option.

8. A method as claimed in any of claims 4 to 7, wherein the communication option is selected such in a system for Long-Term Evolution of the Universal Mobile Telecommunication System that subframes not eligible as subframes of a Multicast Broadcast Single Frequency Network are not configured for data transmission on the first link.

9. The method as claimed in any of claims 5 to 8, wherein the temporal activity pattern of that user equipment comprises control of one or more of monitoring a control channel transmitted from the relay node, data retransmissions for hybrid automatic repeat request to the relay node, and transmission of feedback messages for hybrid automatic repeat request to the relay node.

10. A method as claimed in any of claims 5 to 9, wherein the temporal activity pattern comprises a discontinuous reception cycle.

11. A method as claimed in any preceding claim, wherein said selecting comprises selecting at least one primary pattern from a set of primary patterns, wherein a communication option in the set of selectable communication options can be represented as one primary pattern or a combination of any two or more primary patterns.

12. A method as claimed in claim 10, wherein each primary pattern or combination of primary patterns is associated with an unique identifier for informing about the selected communication option.

13. Apparatus comprising:
means for selecting one of a plurality of communication options, each communication option providing a different division of resources between a first link (10) between a relay node (4) and a base station (2) and a second link (12) between said the relay node (4) and a plurality of user equipment (6) configured to communicate with the relay node (4); and
means for causing said selected communication option to be used to control the division of resources between said first and second links (10, 12), wherein said causing means is configured to cause information to be provided to a user equipment (6) configured to communicate with the relay node (4) to control an activity of that user equipment (6) in dependence on said selected communication option.

14. Apparatus as claimed in claim 13, wherein each communication option comprises information identifying if a period of time is configured for data transmission on the first link or for data transmission on the second link.

15. Apparatus as claimed in claim 14, wherein controlling an activity of that user equipment in dependence on said selected communication option comprises configuring a temporal activity pattern of that user equipment such that active phases of that user equipment comply with the selected communication option.

16. Apparaus as claimed in claim 13 or 14, wherein the communication option is selected such in a system for Long-Term Evolution of the Universal Mobile Telecommunication System that subframes not eligible as subframes of a Multicast Broadcast Single Frequency Network are not configured for data transmission on the first link.

17. A user equipment (6) comprising:
means for receiving information about one of a plurality of communication options, each communication option providing a different division of resources between a first link (10) between a relay node (4) and a base station (2) and a second link (12) between the relay node (4) and a plurality of user equipment (6) configured to communicate with the relay node (4); wherein
said communication option comprises information identifying if a period of time is configured for data transmission on the second link (12); and
means for controlling an activity of the user equipment (6) in dependence on said selected communication option.

18. User equipment as claimed in claim 17, wherein controlling an activity of the user equipment in dependence on said selected communication option comprises overriding a configured temporal activity pattern when an active phase of the configured temporal activity pattern does not comply with the selected communication option.

19. User equipment as claimed in claim 17, wherein controlling an activity of the user equipment in dependence on said selected communication option comprises disregarding periods of time that to not comply with the selected communication option when evaluating a configured temporal activity pattern.

## Patentansprüche

1. Verfahren, das Folgendes umfasst:
Auswählen einer von mehreren Kommunikationsoptionen, wobei jede Kommunikationsoption eine unterschiedliche Aufteilung von Betriebsmitteln zwischen einer ersten Verbindungsstrecke (10) zwischen einem Weiterleitungsknoten (4) und einer Basisstation (2) und einer zweiten Verbindungsstrecke (12) zwischen dem Weiterleitungsknoten (4) und mehreren Anwendergeräten (6), die konfiguriert sind, mit dem Weiterleitungsknoten (4) zu kommunizieren, bereitstellt; und
Verwenden der ausgewählten Kommunikationsoption, um die Aufteilung von Betriebsmitteln zwischen der ersten und der zweiten Verbindungsstrecke (10, 12) zu steuern, wobei das Verwenden das Senden von Informationen zu einem Anwendergerät (6), das konfiguriert ist, mit dem Weiterleitungsknoten (4) zu kommunizieren, um eine Aktivität des Anwendergeräts (6) in Abhängigkeit von der ausgewählten Kommunikationsoption zu steuern, umfasst.

2. Verfahren nach Anspruch 1, das das Auswählen einer Kommunikationsoption umfasst, so dass der Weiterleitungsknoten konfiguriert ist, dass er zur gleichen Zeit auf der ersten und der zweiten Verbindungsstrecke für einen Teil einer Zeitspanne senden kann, und der Weiterleitungsknoten konfiguriert ist, dass er für den anderen Teil der Zeitspanne auf der ersten und der zweiten Verbindungsstrecke empfangen kann.

3. Verfahren nach Anspruch 1, das das Auswählen einer Kommunikationsoption umfasst, so dass der Weiterleitungsknoten konfiguriert ist, so dass er auf der ersten Verbindungsstrecke für einen Teil einer Zeitspanne zu der Basisstation senden kann und von der Basisstation empfangen kann, und der Weiterleitungsknoten konfiguriert ist, so dass er auf der zweiten Verbindungsstrecke für den anderen Teil der Zeitspanne von dem Anwendergerät empfangen und zu dem Anwendergerät senden kann.

4. Verfahren nach einem der Ansprüche 1 bis 3, wobei jede Kommunikationsoption Informationen umfasst, die identifizieren, ob eine Zeitspanne zur Datenübertragung auf der ersten Verbindungsstrecke oder zur Datenübertragung auf der zweiten Verbindungsstrecke konfiguriert ist.

5. Verfahren nach einem der Ansprüche 1 bis 4, wobei das Steuern einer Aktivität des Anwendergeräts in Abhängigkeit von der ausgewählten Kommunikationsoption das Aufheben eines zeitlichen Aktivitätsmusters, das für dieses Anwendergerät konfiguriert ist, wenn eine aktive Phase des vorkonfigurierten zeitlichen Aktivitätsmusters nicht der ausgewählten Kommunikationsoption genügt, umfasst.

6. Verfahren nach einem der Ansprüche 1 bis 4, wobei das Steuern einer Aktivität dieses Anwendergeräts in Abhängigkeit von der ausgewählten Kommunikationsoption das Nichtbeachten von Zeitspannen, die der ausgewählten Kommunikationsoption nicht genügen, wenn ein zeitliches Aktivitätsmuster, das für dieses Anwendergerät konfiguriert ist, bewertet wird, umfasst.

7. Verfahren nach einem der Ansprüche 1 bis 4, wobei das Steuern einer Aktivität dieses Anwendergeräts in Abhängigkeit von der ausgewählten Kommunikationsoption das Konfigurieren eines zeitlichen Aktivitätsmusters dieses Anwendergeräts umfasst, so dass aktive Phasen dieses Anwendergeräts der ausgewählten Kommunikationsoption genügen.

8. Verfahren nach einem der Ansprüche 4 bis 7, wobei die Kommunikationsoption so in einem System für Langzeitentwicklung des universellen Mobiltelekommunikationssystems ausgewählt wird, dass Unterrahmen, die nicht als Unterrahmen eines Gruppenruf-Rundsende-Einzelfrequenznetzes geeignet sind, nicht zur Datenübertragung auf der ersten Verbindungsstrecke konfiguriert sind.

9. Verfahren nach einem der Ansprüche 5 bis 8, wobei das zeitliche Aktivitätsmuster dieses Anwendergeräts das Steuern des Überwachens einer Steuerkanals, der von dem Weiterleitungsknoten gesendet wird, und/oder erneute Datenübertragungen für hybridautomatische Wiederholungsanforderung zu dem Weiterleitungsknoten und/oder Übertragen von Rückmeldungsnachrichten für hybridautomatische Wiederholungsanforderung zu dem Weiterleitungsknoten umfasst.

10. Verfahren nach einem der Ansprüche 5 bis 9, wobei das zeitliche Aktivitätsmuster einen diskontinuierlichen Empfangszyklus umfasst.

11. Verfahren nach einem der vorhergehenden Ansprüche, wobei das Auswählen das Auswählen wenigstens eines primären Musters aus einer Gruppe von primären Mustern umfasst, wobei eine Kommunikationsoption in der Gruppe der wählbaren Kommunikationsoptionen als ein primäres Muster oder eine Kombination aus irgendwelchen zwei oder mehr primären Mustern repräsentiert sein kann.

12. Verfahren nach Anspruch 10, wobei jedes primäre Muster oder jede Kombination aus primären Mustern einer eindeutigen Kennung zum Informieren über die ausgewählte Kommunikationsoption zugeordnet ist.

13. Vorrichtung, die Folgendes umfasst:
Mittel zum Auswählen einer von mehreren Kommunikationsoptionen, wobei jede Kommunikationsoption eine unterschiedliche Aufteilung von Betriebsmitteln zwischen einer ersten Verbindungsstrecke (10) zwischen einem Weiterleitungsknoten (4) und einer Basisstation (2) und einer zweiten Verbindungsstrecke (12) zwischen dem Weiterleitungsknoten (4) und mehreren Anwendergeräten (6), die konfiguriert sind, mit dem Weiterleitungsknoten (4) zu kommunizieren, bereitstellt; und
Mittel zum Bewirken, dass die ausgewählte Kommunikationsoption verwendet wird, um die Aufteilung von Betriebsmitteln zwischen der ersten und der zweiten verbindungsstrecke (10, 12) zu steuern, wobei die Mittel zum Bewirken konfiguriert sind zu bewirken, dass Informationen, die für ein Anwendergerät (6), das konfiguriert ist, mit dem Weiterleitungsknoten (4) zu kommunizieren, um eine Aktivität des Anwendergeräts (6) in Abhängigkeit von der ausgewählten Kommunikationsoption zu steuern, bereitgestellt werden.

14. Vorrichtung nach Anspruch 13, wobei jede Kommunikationsoption Informationen umfasst, die identifizieren, ob eine Zeitspanne zur Datenübertragung auf der ersten Verbindungsstrecke oder zur Datenübertragung auf der zweiten Verbindungsstrecke konfiguriert ist.

15. Vorrichtung nach Anspruch 14, wobei das Steuern einer Aktivität dieses Anwendergeräts in Abhängigkeit von der ausgewählten Kommunikationsoption das Konfigurieren eines zeitlichen Aktivitätsmusters dieses Anwendergeräts umfasst, so dass aktive Phasen dieses Anwendergeräts der ausgewählten Kommunikationsoption genügen.

16. Verfahren nach Anspruch 13 oder 14, wobei die Kommunikationsoption in einem System für Langzeitentwicklung des universellen Mobiltelekommunikationssystems so ausgewählt wird, dass Unterrahmen, die nicht als Unterrahmen eines Gruppenruf-Rundsende-Einzelfrequenznetzes geeignet sind, nicht zur Datenübertragung auf der ersten Verbindungsstrecke konfiguriert sind.

17. Anwendergerät (6), das Folgendes umfasst:
Mittel zum Empfangen von Informationen über eine von mehreren Kommunikationsoptionen, wobei jede Kommunikationsoption eine unterschiedliche Aufteilung von Betriebsmitteln zwischen einer ersten Verbindungsstrecke (10) zwischen einem Weiterleitungsknoten (4) und einer Basisstation (2) und einer zweiten Verbindungsstrecke (12) zwischen dem Weiterleitungsknoten (4) und mehreren Anwendergeräten (6), die konfiguriert sind, mit dem Weiterleitungsknoten (4) zu kommunizieren, bereitstellt; wobei
die Kommunikationsoption Informationen umfasst, die identifizieren, ob eine Zeitspanne zur Datenübertragung auf der zweiten Verbindungsstrecke (12) konfiguriert ist; und
Mittel zum Steuern einer Aktivität des Anwendergeräts (6) in Abhängigkeit von der ausgewählten Kommunikationsoption.

18. Anwendergerät nach Anspruch 17, wobei das Steuern einer Aktivität des Anwendergeräts in Abhängigkeit von der ausgewählten Kommunikationsoption das Aufheben eines konfigurierten zeitlichen Aktivitätsmusters, wenn eine aktive Phase des konfigurierten zeitlichen Aktivitätsmusters nicht der ausgewählten Kommunikationsoption genügt, umfasst.

19. Anwendergerät nach Anspruch 17, wobei das Steuern einer Aktivität des Anwendergeräts in Abhängigkeit von der ausgewählten Kommunikationsoption das Nichtbeachten von Zeitspannen, die der ausgewählten Kommunikationsoption nicht genügen, wenn ein zeitliches Aktivitätsmuster bewertet wird.

## Revendications

1. Un procédé comprenant :
la sélection d'une option de communication d'une pluralité d'options de communication, chaque option de communication fournissant une division de ressources différente entre une première liaison (10) entre un noeud relais (4) et une station de base (2) et une deuxième liaison (12) entre le noeud relais (4) et une pluralité d'équipements d'utilisateur (6) configurés de façon à communiquer avec le noeud relais (4), et
l'utilisation de ladite option de communication sélectionnée de façon à commander la division de ressources entre lesdites première et deuxième liaisons (10, 12),
dans lequel ladite utilisation comprend l'envoi d'informations à un équipement d'utilisateur (6) configuré de façon à communiquer avec le noeud relais (4) de façon à commander une activité de cet équipement d'utilisateur (6) en fonction de ladite option de communication sélectionnée.

2. Un procédé selon la revendication 1, comprenant la sélection d'une option de communication de sorte que ledit noeud relais soit configuré de façon à être capable de transmettre sur les première et deuxième liaisons simultanément pendant un temps donné d'une période de temps et ledit noeud relais est configuré de façon à être capable de recevoir sur les première et deuxième liaisons pendant l'autre temps donné de la période de temps.

3. Un procédé selon la revendication 1, comprenant la sélection d'une option de communication de sorte que ledit noeud relais soit configuré de façon à être capable de transmettre vers ladite station de base et de recevoir de ladite station de base sur ladite première liaison pendant un temps donné d'une période de temps et ledit noeud relais est configuré de façon à être capable de recevoir d'un équipement d'utilisateur et de transmettre vers l'équipement d'utilisateur sur ladite deuxième liaison pendant l'autre temps donné de la période de temps.

4. Un procédé selon l'une quelconque des revendications 1 à 3, dans lequel chaque option de communication comprend des informations identifiant si une période de temps est configurée pour une transmission de données sur la première liaison ou pour une transmission de données sur la deuxième liaison.

5. Un procédé selon l'une quelconque des revendications 1 à 4, dans lequel la commande d'une activité de cet équipement d'utilisateur en fonction de ladite option de communication sélectionnée comprend l'annulation d'un modèle d'activité temporelle configuré pour cet équipement d'utilisateur lorsqu'une phase active du modèle d'activité temporelle préconfiguré n'est pas conforme à l'option de communication sélectionnée.

6. Un procédé selon l'une quelconque des revendications 1 à 4, dans lequel la commande d'une activité de cet équipement d'utilisateur en fonction de ladite option de communication sélectionnée comprend la non-prise en compte de périodes de temps qui ne sont pas conformes à l'option de communication sélectionnée lors de l'évaluation d'un modèle d'activité temporelle configuré pour cet équipement d'utilisateur.

7. Un procédé selon l'une quelconque des revendications 1 à 4, dans lequel la commande d'une activité de cet équipement d'utilisateur en fonction de ladite option de communication sélectionnée comprend la configuration d'un modèle d'activité temporelle de cet équipement d'utilisateur de sorte que des phases actives de cet équipement d'utilisateur soient conformes à l'option de communication sélectionnée.

8. Un procédé selon l'une quelconque des revendications 4 à 7, dans lequel l'option de communication est sélectionnée de sorte que, dans un système pour une évolution à long terme du système de télécommunication mobile universel, des sous-trames non éligibles en tant que sous-trames d'un réseau à fréquence unique de radiodiffusion/multidiffusion ne soient pas configurées pour une transmission de données sur la première liaison.

9. Le procédé selon l'une quelconque des revendications 5 à 8, dans lequel le modèle d'activité temporelle de cet équipement d'utilisateur comprend la commande d'une ou de plusieurs opérations parmi la surveillance d'un canal de commande transmis à partir du noeud relais, des retransmissions de données pour une demande de répétition automatique hybride vers le noeud relais et une transmission de messages de rétroaction pour une demande de répétition automatique hybride vers le noeud relais.

10. Un procédé selon l'une quelconque des revendications 5 à 9, dans lequel le modèle d'activité temporelle comprend un cycle de réception discontinu.

11. Un procédé selon l'une quelconque des revendications précédentes, dans lequel ladite sélection comprend la sélection d'au moins un modèle primaire provenant d'un ensemble de modèles primaires, dans lequel une option de communication dans l'ensemble d'options de communication sélectionnables peut être représentée sous la forme d'un modèle primaire ou d'une combinaison de deux ou plus modèles primaires quelconques.

12. Un procédé selon la revendication 10, dans lequel chaque modèle primaire ou combinaison de modèles primaires est associé à un identifiant unique destiné à fournir des informations relatives à l'option de communication sélectionnée.

13. Un appareil comprenant :
un moyen de sélection d'une option de communication d'une pluralité de options de communication, chaque option de communication fournissant une division de ressources différente entre une première liaison (10) entre un noeud relais (4) et une station de base (2) et une deuxième liaison (12) entre ledit noeud relais (4) et une pluralité d'équipements d'utilisateur (6) configurés de façon à communiquer avec le noeud relais (4), et
un moyen d'amener ladite option de communication sélectionnée à être utilisée de façon à commander la division de ressources entre lesdites première et deuxième liaisons (10, 12),
dans lequel ledit moyen d'amener est configuré de façon à amener des informations à être fournies à un équipement d'utilisateur (6) configuré de façon à communiquer avec le noeud relais (4) de façon à commander une activité de cet équipement d'utilisateur (6) en fonction de ladite option de communication sélectionnée.

14. L'appareil selon la revendication 13, dans lequel chaque option de communication comprend des informations identifiant si une période de temps est configurée pour une transmission de données sur la première liaison ou pour une transmission de données sur la deuxième liaison.

15. L'appareil selon la revendication 14, dans lequel la commande d'une activité de cet équipement d'utilisateur en fonction de ladite option de communication sélectionnée comprend la configuration d'un modèle d'activité temporelle de cet équipement d'utilisateur de sorte que des phases actives de cet équipement d'utilisateur soient conformes à l'option de communication sélectionnée.

16. L'appareil selon la revendication 13 ou 14, dans lequel l'option de communication est sélectionnée de sorte que, dans un système pour une évolution à long terme du système de télécommunication mobile universel, des sous-trames non éligibles en tant que sous-trames d'un réseau à fréquence unique de radiodiffusion/multidiffusion ne soient pas configurées pour une transmission de données sur la première liaison.

17. Un équipement d'utilisateur (6) comprenant :
un moyen de réception d'informations relatives à une option de communication d'une pluralité d'options de communication, chaque option de communication fournissant une division de ressources différente entre une première liaison (10) entre un noeud relais (4) et une station de base (2) et une deuxième liaison (12) entre le noeud relais (4) et une pluralité d'équipements d'utilisateur (6) configurés de façon à communiquer avec le noeud relais (4), dans lequel
ladite option de communication comprend des informations identifiant si une période de temps est configurée pour une transmission de données sur la deuxième liaison (12), et
un moyen de commande d'une activité de l'équipement d'utilisateur (6) en fonction de ladite option de communication sélectionnée.

18. L'équipement d'utilisateur selon la revendication 17, dans lequel la commande d'une activité de l'équipement d'utilisateur en fonction de ladite option de communication sélectionnée comprend l'annulation d'un modèle d'activité temporelle configuré lorsqu'une phase active du modèle d'activité temporelle configuré n'est pas conforme à l'option de communication sélectionnée.

19. L'équipement d'utilisateur selon la revendication 17, dans lequel la commande d'une activité de l'équipement d'utilisateur en fonction de ladite option de communication sélectionnée comprend la non-prise en compte de périodes de temps qui ne sont pas conformes à l'option de communication sélectionnée lors de l'évaluation d'un modèle d'activité temporelle configuré.
